# EUROPEAN PATENT SPECIFICATION

(11) **EP 1 615 969 B1**
(45) Date of publication and mention of the grant of the patent: **02.01.2008**
(21) Application number: 04729211.5
(22) Date of filing: 23.04.2004
(51) Int. Cl.: C08K 7/06, C08K 7/24, C08L 69/00, C08L 25/06

(54) **CARBON FIBER-CONTAINING RESIN DISPERSION SOLUTION AND RESIN COMPOSITE MATERIAL**
KOHLENSTOFFFASERN ENTHALTENDE HARZDISPERSION UND HARZVERBUNDMATERIAL
SOLUTION DE DISPERSON DE RESINE CONTENANT DES FIBRES DE CARBONE ET MATIERE COMPOSITE DE RESINE

(30) Priority: 24.04.2003 JP 2003120617
(43) Date of publication of application: 18.01.2006
(73) Proprietor: Showa Denko K.K., Tokyo 105-8518 (JP)
(72) Inventor: TAKAHASHI, Tatsuhiro c/o Yamagata University, Yonezawa-shi, Yamagata 992-8510 (JP); SATO, Eiji c/o Yamagata University, Yonezawa-shi, Yamagata 992-8510 (JP); MORITA, Toshio Corp. R&D Center Showa denko K.K., Kawasaki-shi, Kanagawa 210-0858 (JP)
(74) Representative: Strehl Schübel-Hopf & Partner
(86) International application number: PCT/JP2004/005898
(87) International publication number: WO 2004/094521

(56) References cited:
- WO-A-03/028128
- POTSCHKE P ET AL: "Rheological behavior of multiwalled carbon nanotube/polycarbonate composites" POLYMER, ELSEVIER SCIENCE PUBLISHERS B.V, GB, vol. 43, no. 11, May 2002 (2002-05), pages 3247-3255, XP004346906 ISSN: 0032-3861

## Description

### CROSS REFERENCE TO THE RELATED APPLICATION

This is an application filed pursuant to 35 U.S.C. Section 111(a) with claiming the benefit of U.S. Provisional application Serial No. 60/467,155 filed May 2, 2003 under the provision of 35 U.S.C. Section 111(b), pursuant to 35 U.S.C. Section 119(e)(1).

### TECHNICAL FIELD

The present invention relates to a dispersion containing vapor grown carbon fiber. More particularly, the present invention relates to a vapor-grown-carbon-fiber-containing dispersion in which vapor grown carbon fiber is uniformly dispersed in a resin, to a method for preparing the dispersion, to a resin composite material produced by use of the dispersion in which the vapor grown carbon fiber is uniformly admixed, to a method for preparing the resin composite material, and to use of the resin composite material (as an electroconductive material or a thermal conductive material).

### BACKGROUND ART

Dispersing carbon fiber in a matrix such as a resin is a widely and commonly performed technique for imparting electroconductivity or thermal conductivity to an object. Among carbon fibers, vapor grown carbon fiber is particularly useful, in that addition of only a small amount thereof to a resin greatly improves electroconductivity and thermal conductivity, without adversely affecting processing-related characteristics of the resultant resin composition and the appearance of a molded product (Japanese Patent No. 2862578 (US Patent No. 5,643,990)).

When carbon fiber is incorporated into resin, mixing must be performed so that carbon fiber is uniformly present in the resin. Generally, such mixing of carbon fiber into resin is carried out through a method in which carbon fiber is added to molten resin, followed by kneading by use of a twin screw extruder or a modified screw barrel. However, in order to uniformly mix in a resin irregular-shaped vapor grown fine carbon fiber having a fiber diameter of 0.001 to 5 µm and a ratio of fiber length to fiber diameter (aspect ratio) of 5 to 15,000, the melt kneading method involves problems, in that much power is required and breakage of vapor grown carbon fiber occurs during kneading.

Therefore, in an attempt to provide a more convenient method for attaining a uniform mixture of vapor grown fine carbon fiber in resin, the present inventors have focused on preparation of a dispersion in which fine carbon fiber is uniformly dispersed in an organic solvent of a thermoplastic resin. If a uniform dispersion of fine carbon fiber in a thermoplastic resin can be obtained, the dispersion may be applied to an object such as a substrate material by coating, spraying, immersing, etc., after which the solvent may be removed by drying, to thereby easily produce a thermoplastic resin composition (composite), which has fine carbon fiber uniformly dispersed therein on the substrate, as a material having functions for electroconductive or thermal conductivite material.

As a prior art reference related to a dispersion system of carbon fiber in an organic solvent, Japanese Patent Publication (*kokai*) No. 2002-255528 discloses a micro particle dispersion prepared by dispersing fine particles in a bipolar aprotic solvent (dimethylsulfoxide, dimethylformamide or acetonitrile). Carbon nanotubes having a size of about 10 nm to 10 µm are mentioned in the publication as an example of micro particles. However, when the present inventors performed using a bipolar aprotic solvent (dimethylformamide) disclosed in the publication, no uniform dispersion can be obtained with respect to vapor grown carbon fiber. Moreover, when vapor grown carbon fiber was dispersed in a single solvent of tetrahydrofuran, benzene or dichloromethane through mechanical stirring, lumps of vapor grown carbon fiber that were initially present did not disintegrate and failed to yield a dispersion.

The prior art document WO 03/028128 discloses a carbon material production method and the use thereof.

### DISCLOSURE OF THE INVENTION

Accordingly, an objective of the present invention is to provide a dispersion in which vapor grown carbon fiber having a fiber diameter of 0.001 to 5 µm and an aspect ratio of 5 to 15,000 is uniformly dispersed in a resin, and a production method thereof.

Further objective of the present invention is to provide a resin composition produced by use of the above-mentioned dispersion in which the vapor grown carbon fiber is uniformly admixed, a production method thereof, and use, as an electroconductive material or a thermal conductive material, of the resin composite material obtained from the above-mentioned dispersion through, for example, coating.

In view of the foregoing, the present inventors have continued extensive studies, and have found that a resin solution in which vapor grown carbon fiber is uniformly dispersed is easily obtained by employment, as a resin, a polymer containing as its repeating unit a structural unit having at least a cyclic structure, and a certain organic solvent having an ET value of 45 or less, which value is a solvent parameter calculated from the absorption spectrum of pyridinium-N-phenol betaine *("Shin-jikken Kagaku Koza"* ("New Experimental Chemistry") 14 (V), 2594 (1978); Ann., 661, 1 (1963)), and have accomplished the invention.

Accordingly, the present invention relates to a dispersion containing vapor grown carbon fiber and a production method thereof, and to an electroconductive material and a thermal conductive material produced using a resin composite material prepared from the dispersion system, as described below.
1. A vapor-grown-carbon-fiber-containing dispersion consisting of a vapor grown carbon fiber having a fiber diameter of 0.001 to 5 µm and an aspect ratio of 5 to 15,000 in a solution of a resin soluble in an organic solvent and an organic solvent, which has an ET value of 45 or less, where the ET value is a solvent parameter calculated from the absorption spectrum of pyridinium-N-phenol betaine, wherein lumps of the carbon fiber are partially disintegrated to thereby allow separated individual filaments of the carbon fiber to be present as dispersed, and wherein the ratio (by mass) of vapor grown carbon fiber to resin soluble in organic solvent is "carbon fiber" : "resin soluble in organic solvent" = 0.1 to 80 : 20 to 99.9, and the resin content in the dispersion is 0.1 to 60 mass%.
2. The vapor-grown-carbon-fiber-containing dispersion as claimed in claim 1, wherein the carbon fiber is present such that carbon fiber lumps having a diameter of 40 µm or less and separated individual carbon fiber filaments are intermingled.
3. The vapor-grown-carbon-fiber-containing dispersion as claimed in claim 1 or 2, wherein the vapor grown carbon fiber contains 0.001 to 5 mass% of boron.
4. The vapor-grown-carbon-fiber-containing dispersion as claimed in claim 1 or 2, wherein the resin soluble in an organic solvent is a resin comprising a polymer having a structural repeating unit which at least partially contains a cyclic structure.
5. The vapor-grown-carbon-fiber-containing dispersion as claimed in claim 1 or 2, wherein the resin soluble in an organic solvent is any of polystyrene, polycarbonate, polyarylate, polysulfone, polyether-imide, polyethylene terephthalate, polyphenylene oxide, polyphenylene sulfide, polybutylene terephthalate, polyimide, polyamidoimide, polyether-ether-ketone, or polyamic acid, or a mixture thereof.
6. The vapor-grown-carbon-fiber-containing dispersion as claimed in claim 1 or 2, wherein the organic solvent has an ET value of 45 or less and has a structure which is partially cyclic, where the ET value is a solvent parameter calculated from the absorption spectrum of pyridinium-N-phenol betaine.
7. The vapor-grown-carbon-fiber-containing dispersion as claimed in claim 1, wherein the organic solvent is any of tetrahydrofuran (THF), N-methylpyrrolidone, benzene, toluene, cyclohexane, γ-butyrolactone, butyl cellosolve, or a mixture thereof.
8. A method for preparing a dispersion as claimed in claim 1, comprising a step of dissolving a resin in an organic solvent, adding thereto vapor grown carbon fiber having a fiber diameter of 0.001 to 5 µm and an aspect ratio of 5 to 15,000, and subjecting the resultant mixture to stirring and/or ultrasonication.
9. A method for preparing a dispersion as claimed in claim 1, comprising a step of mixing a resin soluble in an organic solvent and vapor grown fine carbon fiber having a fiber diameter of 0.001 to 5 µm and an aspect ratio of 5 to 15,000, and adding the resultant mixture to an organic solvent.
10. A method for producing a resin composite material containing vapor grown carbon fiber, characterized by applying a vapor grown carbon fiber dispersion as claimed in any of claims 1 to 7 to a substrate material, followed by removal of the solvent.
11. A resin composite material containing vapor grown carbon fiber obtainable by the method as claimed in claim 10.
12. An electroconductive material including a resin composite material obtainable by the method as claimed in claim 10.
13. A thermal conductive material including a resin composite material obtainable by the method as claimed in claim 10.

The carbon fiber which may be used in the present invention is vapor grown carbon fiber having a fiber diameter of 0.001 µm to 5 µm and an aspect ratio of 5 to 15,000. Preferred examples of such a carbon fiber include carbon fiber grown from the vapor phase, which fiber may be produced by blowing, in a high temperature atmosphere, a gaseous organic compound together with iron or a similar element serving as a catalyst (see Japanese Patent No. 2778434).

The carbon fiber grown from the vapor phase (the vapor grown carbon fiber) may be, for example, "as-produced" carbon fiber; carbon fiber obtained through thermal treatment of "as-produced" carbon fiber at 800 to 1,500°C; or carbon fiber obtained through graphitization of "as-produced" carbon fiber at 2,000 to 3,000°C. Preferably, the vapor grown carbon fiber is thermally treated at around 1500°C or graphitized at 2,000 to 3,000°C before use.

During the graphitization process, an element such as B, Al, Be or Si, preferably B, promoting the crystallization of carbon may be added to the vapor grown carbon fiber, to thereby produce vapor grown carbon fiber, wherein the carbon crystals of the fiber contain a small amount (0.001 to 5 mass%, preferably 0.01 to 2 mass%) of a crystallization promoting element (WO00/585326).

The resin to be used for forming a dispersion of the present invention may be a thermoplastic resin, a thermosetting resin or any other type of resin, so long as it is soluble in an organic solvent. The resin soluble in an organic solvent may be a resin including a polymer having a structural repeating unit which at least partially contains a cyclic structure. The cyclic structure may contain, in addition to carbon atoms, oxygen, nitrogen or sulfur atoms.

Examples of the resin include polystyrene, polycarbonate (PC), polyarylate (PAR), polysulfone, polyether-imide, polyethylene sulfide, polyphenylene sulfide (PPS), polyethylene terephthalate (PET), polybutylene terephthalate (PBT), polyimide, polyamidoimide, polyether-ether-ketone, modified polyphenylene oxide and polyamic acid. Preferred examples of the resin include polystyrene, polycarbonate, polyarylate, polysulfone, polyether-imide, polyethylene sulfide, polyphenylene sulfide, polybutylene terephthalate, polyimide, polyamidoimide, polyether-ether-ketone, polyamic acid and mixtures thereof.

The ratio (by mass) of vapor grown carbon fiber to resin soluble in organic solvent varies depending on the intended use of the resin composite material. Generally, the ratio; i.e., carbon fiber: resin soluble in organic solvent, fall within the range of 0.1 : 99.9 to 80 : 20, and the resin content of the dispersion is 0.1 to 60 mass%. When the amount of vapor grown carbon fiber is less than 0.1 mass%, satisfactory electroconductivity or thermal conductivity of the composition cannot be obtained after removal of solvent, whereas when the amount of fiber is in excess of 80 mass%, the resin coating composition obtained from the resin dispersion is apt to be brittle.

The organic solvent employed as the dispersion medium in the present invention preferably has an ET value of 45 or less, where the ET value is a solvent parameter calculated from the absorption spectrum of pyridinium-N-phenol betaine ("*Shin-jikken Kagaku Koza"* ("New Experimental Chemistry") 14 (V), 2594 (1978)); Ann., 661, 1 (1963)). Preferred examples of the solvent include dichloromethane, chloroform, dimethoxyethane, ethyl acetate, bromobenzene, chlorobenzene, tetrahydrofuran (THF), anisole, dioxane, diethyl ether, benzene, carbon tetrachloride, toluene, cyclohexane, hexane and isooctane. More preferred solvents have a cyclic structure and examples thereof include tetrahydrofuran (THF), N-methylpyrrolidone, benzene, toluene, cyclohexane and y-butyrolactone.

The solute resin is incorporated in an amount of 60 mass% or less so as to facilitate dispersion.

For example, by dissolving resin in an organic solvent, adding vapor grown carbon fiber thereto, and then subjecting the mixture to stirring or ultrasonication, a stable dispersion can be produced.

The state of dispersion differs depending on the condition of vapor grown carbon fiber. Generally, before being dispersed, individual filaments of vapor grown carbon fiber are not separated from one another. Rather, they exist as an agglomerate having a diameter of about 100 µm. When such vapor grown carbon fiber is dispersed by the present method, individual filaments of the vapor grown carbon fiber are separated from each other in the resultant dispersion. Or, the resultant dispersion may contain agglomerates each having a diameter of about 40 µm or less and individual carbon fiber filaments in an intermingled state.

Polycarbonate employed as resin, to which vapor grown carbon fiber having a fiber diameter of 0.15 µm and an aspect ratio of 70 and having undergone a heat treatment at 2,800°C had been added in an amount of 5 mass%, was incorporated into benzene (BZ, ET value = 34.5), tetrahydrofuran (THF, ET value = 37.4), dichloromethane (DCM, ET value = 41.1), dimethylformamide (DMF, ET value = 43.8), or acetonitrile (ATN, ET value = 46.0) to thereby prepare 10 mass% dispersions of the resin, followed by stirring for 30 minutes with a stirrer. In the case where the organic solvent is any of benzene, tetrahydrofuran, dichloromethane and dimethylformamide, the resultant vapor-grown-carbon-fiber-containing dispersion does not cause precipitation of vapor grown carbon fiber even after being left to stand for one week. In contrast, in the case where the organic solvent is acetonitrile, the resultant dispersion starts to precipitate on the second day, producing a clear supernatant.

Applying the dispersion of the present invention to a substrate (such as a circuit board) by the coat drying method (in which after coating, the solvent contained therein is evaporated by drying) enables to obtain a resin composite material in which vapor grown carbon fiber is uniformly dispersed. Thus-obtained materials are endowed with excellent electroconductivity and thermal conductivity. For applying the dispersion of the present invention to a substrate, conventional methods for coating a paste or dispersion may be employed; for example, coating may be formed through use of a doctor blade, screen printing or spin coating. For drying the solvent of the coating, conventional methods customarily employed for evaporating solvents, such as heat drying and vacuum drying, can be performed.

### BRIEF DESCRIPTION OF THE DRAWINGS

Fig. 1(A) and 1(B) are optical micrograph images respectively of a PC/THF-based dispersion of VGCF and a PS/THF-based dispersion of VGCF.
Fig. 2(A) and 2(B) are optical micrograph images respectively of thin films formed through spin coating of a PC/THF-based dispersion of VGCF and formed through spin coating of a PS/THF-based dispersion of VGCF.
Fig. 3(A) and 3(B) are optical micrograph images respectively of a PS/BZ-based dispersion of VGCF and a PS/DMF-based dispersion of VGCF.
Fig. 4(A) and 4(B) are optical micrograph images respectively of thin films formed through spin coating of a PS/BZ-based dispersion of VGCF and formed through spin coating of a PS/DMF-based dispersion of VGCF.
Fig. 5 is an optical micrograph image of a dispersion of VGCF in a mixed solution of polyamic acid/N-methyl-2-pyrrolidone, γ-butyrolactone and butyl cellosolve.
Fig. 6(A) and 6(B) are optical micrograph images respectively of dispersions of VGCF in THF (A) and in DCM (B).
Fig. 7(A) and 7(B) are optical micrograph images respectively of dispersions of VGCF in BZ (A) and in DMF (B).
Fig. 8 is an optical micrograph image of a PS/ATN-based dispersion of VGCF.
Fig. 9 is an optical micrograph image of a PMMA/THF-based dispersion of VGCF.

### BEST MODE FOR CARRYING OUT THE INVENTION

The present invention will next be described by way of examples and comparative examples.

### Example 1:

A 10 mass% solution of polycarbonate (PC; product of Teijin Chemicals Ltd., AD5503; number average molecular weight = 20,000, mass average molecular weight = 32,000) in tetrahydrofuran (THF) was prepared. To the solution, vapor grown carbon fiber (VGCF, registered trademark, product of Showa Denko K. K.) having a fiber diameter of 0.15 µm and an aspect ratio of 70 and having undergone heat treatment at 2,800°C was added in an amount of 0.2 mass%, followed by mixing with a mechanical stirrer at 600 rpm for 30 minutes. A dispersion in which the vapor grown carbon fiber was uniformly dispersed was obtained. After the dispersion was left to stand for seven days at room temperature, precipitation of vapor grown carbon fiber was not observed. Observation under an optical microscope confirmed that individual filaments of VGCF (registered trademark) were quite excellently dispersed. Spin coating was performed by applying several droplets of the dispersion onto a cover glass and rotating the cover glass at 100 rpm for 5 seconds, 1,000 rpm for 10 seconds, and 100 rpm for 5 seconds, whereby thin film of composite material was produced. The resultant thin film was found to contain VGCF (registered trademark) in an excellently dispersed manner.

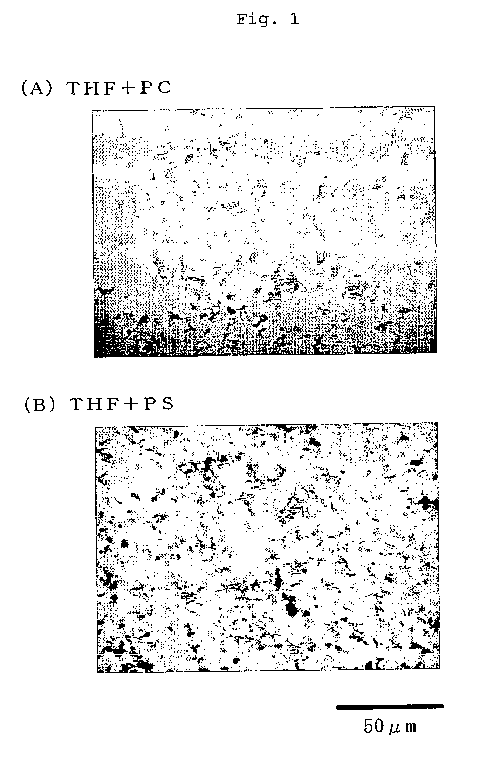

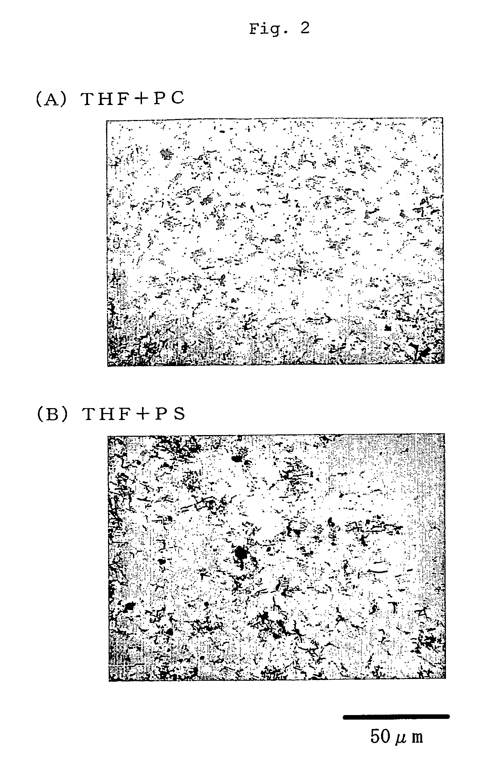

Similarly, thin film was produced by use of a dispersion and the spin coating method, except that the above-employed polycarbonate (PC) was replaced by polystyrene (PS; product of Asahi Kasei, PS666, number average molecular weight = 420,000, mass average molecular weight = 1,000,000). Figs. 1 and 2 show optical micrograph images of the dispersions and thin films obtained.

### Example 2:

The combination of polystyrene (PS) and THF employed in Example 1 was modified to use benzene (BZ) or dimethylformamide (DMF) instead of THF, to thereby produce a dispersion and form a thin film through spin coating.

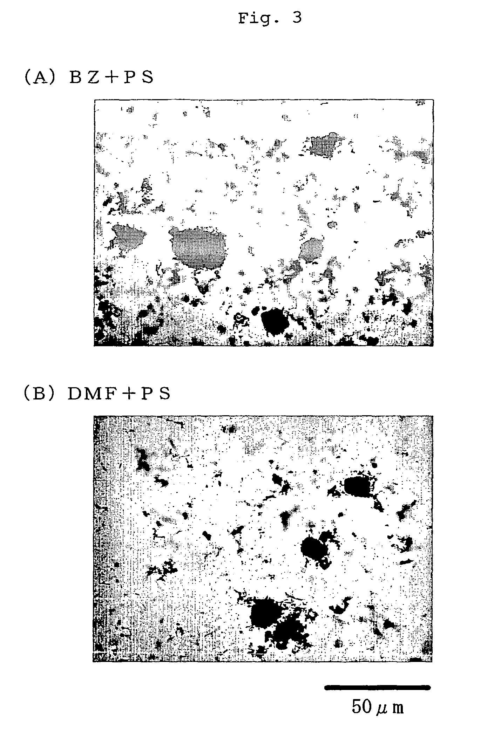

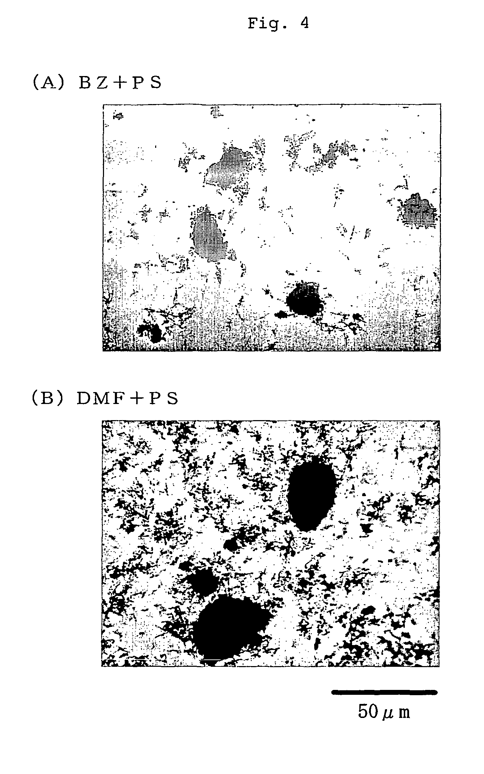

Figs. 3 and 4 show optical micrograph images of the dispersions and thin films obtained.

### Example 3:

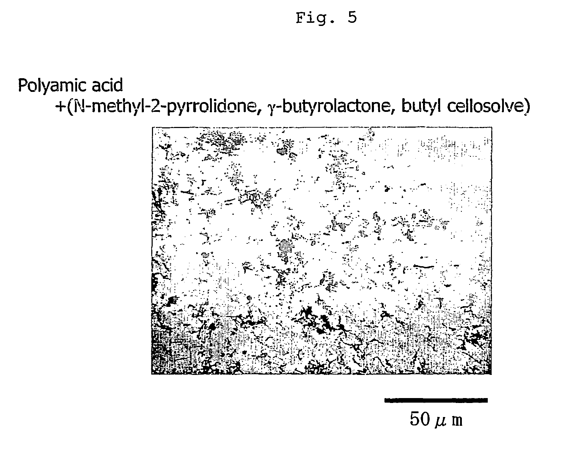

A solution was prepared by dissolving 5 mass% polyamic acid (which is a precursor of polyimide) in a solvent prepared by mixing N-methyl-2-pyrrolidone, γ-butyrolactone, and butyl cellosolve at proportions of 30:30:35 by mass% and adding thereto. VGCF (registered trademark) was added to the solution in an amount of 2 mass% or 5 mass% on the basis of polymer, followed by stirring at 200 rpm for 20 minutes with a magnetic stirrer. The mixture was left to stand at room temperature for 7 days. Both of the dispersion containing 2 mass% VGCF (registered trademark) and the dispersion of 5 mass% VGCF (registered trademark) were found to be free from precipitation of vapor grown carbon fiber. Observation under an optical microscope confirmed that individual filaments of VGCF (registered trademark) were quite excellently dispersed. The optical micrograph is shown in Fig. 5. A thin film of a composite was formed through spin coating by applying several droplets of the dispersion onto a cover glass and rotating the cover glass at 100 rpm for 5 seconds, 1,000 rpm for 10 seconds and 100 rpm for 5 seconds. The resultant thin film was found to contain VGCF (registered trademark) in an excellently dispersed manner.

### Example 4:

The vapor-grown-carbon-fiber-containing dispersion prepared in Example 1 was applied onto a substrate of circuit board through screen printing, then dried with air, to thereby produce a coating film of a vapor-grown-carbon-fiber-containing composite. Electroconductivity of the coating film was evaluated (Evaluation Sample No. 1). Separately, coating films were formed by varying the amounts of polycarbonate and vapor grown carbon fiber as shown in Table 1 (Evaluation Sample Nos. 2 to 4). Furthermore, another coating film was formed through use of polystyrene (PS; product of Asahi Kasei, PS666, number average molecular weight = 420,000, mass average molecular weight = 1,000,000) instead of polycarbonate, and electroconductivity of the resultant sample (Evaluation Sample No. 5) was evaluated. The results are shown in Table 1.

### Comparative Example 1:

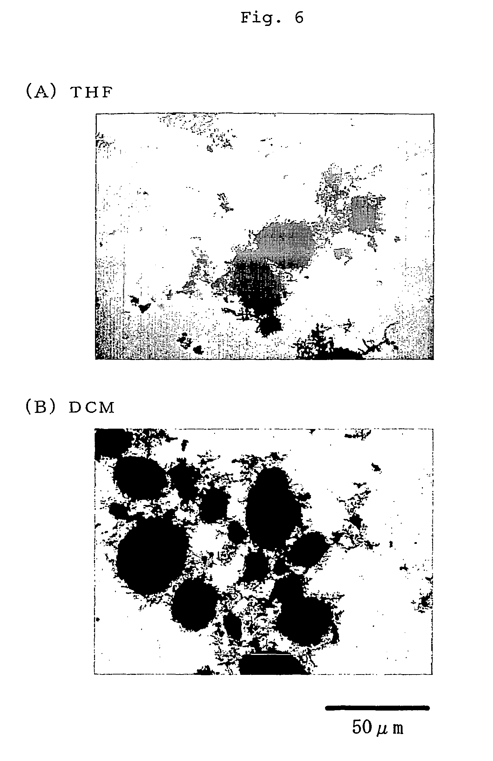

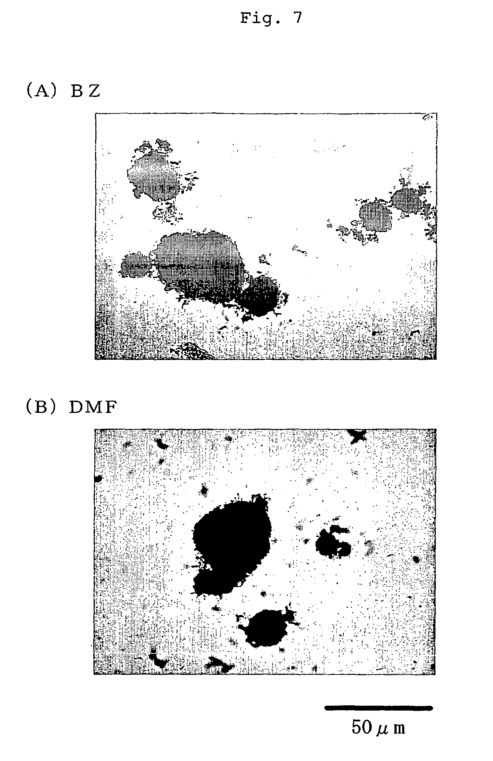

VGCF was added in each solvent of tetrahydrofuran (THF), dichloromethane (DCM), benzene (BZ) and dimethylformamide (DMF), so as to attain a VGCF (registered trademark) concentration of 0.2 mass%. Each mixture was stirred with a mechanical stirrer at 600 rpm for 30 minutes, to thereby yield a dispersion. The dispersion was sandwiched between a slide glass and a cover glass, and placed under an optical microscope for observation of the dispersion state of VGCF (registered trademark) at a magnification of x400. Initially present lumps of VGCF (registered trademark) were still observed. After the dispersion was left to stand at room temperature, precipitation of vapor grown carbon fiber was observed on the second day. Figs. 6 and 7 show optical micrograph images of the dispersions.

### Comparative Example 2:

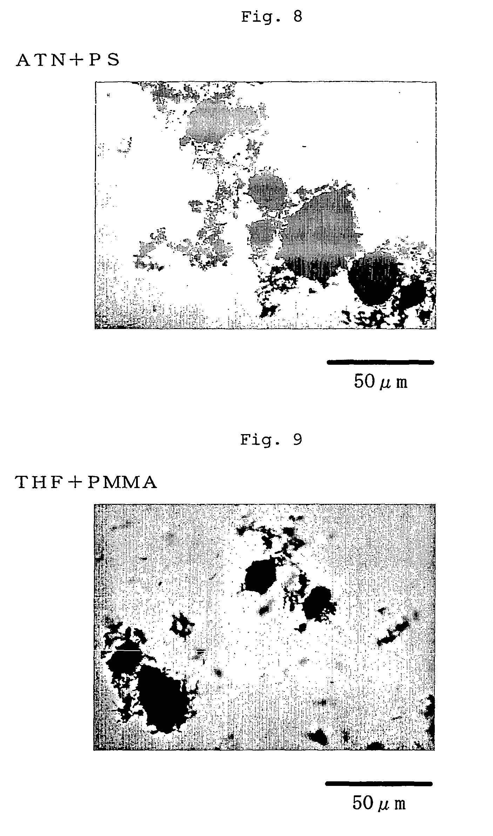

The solvent THF employed in Example 2 was replaced by acetonitrile (ATN), to thereby produce a dispersion. Fig. 8 shows an optical micrograph image of the dispersion.

### Comparative Example 3:

The resin PC employed in Example 1 was replaced by polymethylmethacrylate (PMMA; product of Asahi Kasei, 60N, number average molecular weight = 76,000, mass average molecular weight = 150,000), to thereby produce a dispersion. Fig. 9 shows an optical micrograph image of the dispersion.

**Table 1**

| No. | Concentration in dispersion | | Volume resistivity (Ωcm) |
|---|---|---|---|
| | Thermoplastic resin/concentration (mass%) | Vapor grown carbon fiber (mass%) | |
| 1 | polycarbonate/10 | 0.2 | 10¹⁰ |
| 2 | polycarbonate/40 | 10 | 10¹ |
| 3 | polycarbonate/30 | 20 | 10⁰ |
| 4 | polycarbonate/20 | 30 | 10⁰ |
| 5 | polystyrene/40 | 10 | 10¹ |

### INDUSTRIAL APPLICABILITY

The present invention enables to produce a resin solution in which vapor grown carbon fiber is uniformly dispersed, through use of vapor grown carbon fiber having a fiber diameter of 0.001 to 5 µm and an aspect ratio of 5 to 15,000, a resin which is soluble to an organic solvent, and a nonpolar solvent having an ET value of 45 or less as an organic solvent, where the ET value is a solvent parameter calculated from the absorption spectrum of pyridinium-N-phenol betaine. Electroconductive materials and thermal conductive materials can be readily obtained from the dispersion by, for example, coating.

## Claims

1. A vapor-grown-carbon-fiber-containing dispersion consisting of a vapor grown carbon fiber having a fiber diameter of 0.001 to 5 µm and an aspect ratio of 5 to 15,000 in a solution of a resin soluble in an organic solvent and an organic solvent, which has an ET value of 45 or less, where the ET value is a solvent parameter calculated from the absorption spectrum of pyridinium-N-phenol betaine, wherein lumps of the carbon fiber are partially disintegrated to thereby allow separated individual filaments of the carbon fiber to be present as dispersed, and wherein the ratio (by mass) of vapor grown carbon fiber to resin soluble in organic solvent is "carbon fiber" : "resin soluble in organic solvent" = 0.1 to 80 : 20 to 99.9, and the resin content in the dispersion is 0.1 to 60 mass%.

2. The vapor-grown-carbon-fiber-containing dispersion as claimed in claim 1, wherein the carbon fiber is present such that carbon fiber lumps having a diameter of 40 µm or less and separated individual carbon fiber filaments are intermingled.

3. The vapor-grown-carbon-fiber-containing dispersion as claimed in claim 1 or 2, wherein the vapor grown carbon fiber contains 0.001 to 5 mass% of boron.

4. The vapor-grown-carbon-fiber-containing dispersion as claimed in claim 1 or 2, wherein the resin soluble in an organic solvent is a resin comprising a polymer having a structural repeating unit which at least partially contains a cyclic structure.

5. The vapor-grown-carbon-fiber-containing dispersion as claimed in claim 1 or 2, wherein the resin soluble in an organic solvent is any of polystyrene, polycarbonate, polyarylate, polysulfone, polyether-imide, polyethylene terephthalate, polyphenylene oxide, polyphenylene sulfide, polybutylene terephthalate, polyimide, polyamidoimide, polyether-ether-ketone, or polyamic acid, or a mixture thereof.

6. The vapor-grown-carbon-fiber-containing dispersion as claimed in claim 1 or 2, wherein the organic solvent has an ET value of 45 or less and has a structure which is partially cyclic, where the ET value is a solvent parameter calculated from the absorption spectrum of pyridinium-N-phenol betaine.

7. The vapor-grown-carbon-fiber-containing dispersion as claimed in claim 1, wherein the organic solvent is any of tetrahydrofuran (THF), N-methylpyrrolidone, benzene, toluene, cyclohexane, γ-butyrolactone, butyl cellosolve, or a mixture thereof.

8. A method for preparing a dispersion as claimed in claim 1, comprising a step of dissolving a resin in an organic solvent, adding thereto vapor grown carbon fiber having a fiber diameter of 0.001 to 5 µm and an aspect ratio of 5 to 15,000, and subjecting the resultant mixture to stirring and/or ultrasonication.

9. A method for preparing a dispersion as claimed in claim 1, comprising a step of mixing a resin soluble in an organic solvent and vapor grown fine carbon fiber having a fiber diameter of 0.001 to 5 µm and an aspect ratio of 5 to 15,000, and adding the resultant mixture to an organic solvent.

10. A method for producing a resin composite material containing vapor grown carbon fiber, **characterized by** applying a vapor grown carbon fiber dispersion as claimed in any of claims 1 to 7 to a substrate material, followed by removal of the solvent.

11. A resin composite material containing vapor grown carbon fiber obtainable by the method as claimed in claim 10.

12. An electroconductive material including a resin composite material obtainable by the method as claimed in claim 10.

13. A thermal conductive material including a resin composite material obtainable by the method as claimed in claim 10.

## Patentansprüche

1. Dampfphasengezüchtete Kohlenstofffasern enthaltende Dispersion, die aus dampfphasengezüchteten Kohlenstofffasern mit einem Faserdurchmesser von 0,001 bis 5 µm und einem Längen/Breitenverhältnis von 5 bis 15.000 in einer Lösung eines in einem organischen Lösungsmittel löslichen Harzes und aus einem organischen Lösungsmittel besteht, welches einen ET-Wert von 45 oder weniger hat, wobei der ET-Wert ein Lösungsmittelparameter ist, der aus dem Absorptionsspektrum von Pyridinium-N-phenolbetain berechnet wird, worin Klumpen der Kohlenstofffasern teilweise zersetzt sind, so dass zugelassen wird, dass getrennte individuelle Filamente der Kohlenstofffasern dispergiert vorhanden sind, und worin das Massenverhältnis der dampfphasengezüchteten Kohlenstofffasern zu dem in einem organischen Lösungsmittel löslichen Harz, "Kohlenstofffasern" : "in einem organischen Lösungsmittel lösliche Harz", 0,1 bis 80 : 20 bis 99,9 ist und worin der Harzanteil in der Dispersion 0,1 bis 60 Massen-% ist.

2. Dampfphasengezüchtete Kohlenstofffasern enthaltende Dispersion nach Anspruch 1, worin die Kohlenstofffasern so vorhanden sind, dass die Kohlenstofffaserklumpen mit einem Durchmesser von 40 µm oder weniger und getrennte individuelle Kohlenstofffaserfilamente vermengt sind.

3. Dampfphasengezüchtete Kohlenstofffasern enthaltende Dispersion nach Anspruch 1 oder 2, worin die dampfphasengezüchteten Kohlenstofffasern 0,001 bis 5 Massen-% Bor enthalten.

4. Dampfphasengezüchtete Kohlenstofffasern enthaltende Dispersion nach Anspruch 1 oder 2, worin das in einem organischen Lösungsmittel lösliche Harz ein Harz ist, das ein Polymer mit einer strukturellen Wiederholungseinheit enthält, die zumindest teilweise eine cyclische Struktur umfasst.

5. Dampfphasengezüchtete Kohlenstofffasern enthaltende Dispersion nach Anspruch 1 oder 2, worin das in einem organischen Lösungsmittel lösliche Harz beliebig unter Polystyrol, Polycarbonat, Polyarylat, Polysulfon, Polyetherimid, Polyethylenterephthalat, Polyphenylenoxid, Polyphenylensulfid, Polybutylenterephthalat, Polyimid, Polyamidoimid, Polyetheretherketon oder Polyaminsäure oder einem Gemisch davon ausgewählt ist.

6. Dampfphasengezüchtete Kohlenstofffasern enthaltende Dispersion nach Anspruch 1 oder 2, wobei das organische Lösungsmittel einen ET-Wert von 45 oder weniger hat und eine Struktur aufweist, die teilweise cyclisch ist, wobei der ET-Wert ein Lösungsmittelparameter ist, der aus dem Absorptionsspektrum von Pyridinium-N-phenolbetain berechnet wird.

7. Dampfphasengezüchtete Kohlenstofffasern enthaltende Dispersion nach Anspruch 1, wobei das organische Lösungsmittel beliebig unter Tetrahydrofuran (THF), N-Methylpyrrolidon, Benzol, Toluol, Cyclohexan, ã-Butyrolacton, Butylcellosolv oder einem Gemisch davon ausgewählt ist.

8. Verfahren zum Herstellen einer Dispersion nach Anspruch 1, welches die Stufe umfasst, bei der ein Harz in einem organischen Lösungsmittel aufgelöst wird, dampfphasengezüchtete Kohlenstofffasern mit einem Faserdurchmesser von 0,001 bis 5 µm und einem Längen/Breitenverhältnis von 5 bis 15.000 zugegeben werden und das erhaltene Gemisch einem Rühren und/oder einer Ultraschallbehandlung unterworfen wird.

9. Verfahren zum Herstellen einer Dispersion nach Anspruch 1, welches die Stufe umfasst, bei der eine in einem organischen Lösungsmittel lösliches Harz und dampfphasengezüchtete feine Kohlenstofffasern mit einem Faserdurchmesser von 0,001 bis 5 µm und einem Längen/Breitenverhältnis von 5 bis 15.000 gemischt werden und das erhaltene Gemisch zu einem organischen Lösungsmittel gegeben wird.

10. Verfahren zum Herstellen eines Harzverbundmaterials, welches dampfphasengezüchtete Kohlenstofffasern enthält, **dadurch gekennzeichnet, dass** eine dampfphasengezüchtete Kohlenstofffasern enthaltende Dispersion nach einem der Ansprüche 1 bis 7 auf ein Substratmaterial gegeben wird und das Lösungsmittel dann entfernt wird.

11. Harzverbundmaterial, welches dampfphasengezüchtete Kohlenstofffasern enthält und nach dem Verfahren nach Anspruch 10 erhältlich ist.

12. Elektrisch leitendes Material, das ein nach dem Verfahren des Anspruchs 10 erhältliches Harzverbundmaterial umfasst.

13. Thermisch leitendes Material, das ein durch das Verfahren nach Anspruch 10 erhältliches Harzverbundmaterial umfasst.

## Revendications

1. Dispersion contenant une fibre de carbone formée en phase gazeuse consistant en une fibre de carbone formée en phase gazeuse ayant un diamètre de fibre de 0,001 à 5 µm et un rapport d'allongement de 5 à 15 000 dans une solution d'une résine soluble dans un solvant organique et un solvant organique, qui a une valeur ET de 45 ou moins, où la valeur ET est un paramètre de solvant calculé d'après le spectre d'absorption de pyridinium-N-phénolbétaïne, où des agrégats de la fibre de carbone sont partiellement désintégrés pour permettre ainsi à des filaments individuels séparés de la fibre de carbone d'être présents à l'état dispersé, et où le rapport (en masse) de la fibre de carbone formée en phase gazeuse à la résine soluble dans un solvant organique est "fibre de carbone" : "résine soluble dans un solvant organique" = 0,1 à 80:20 à 99,9, et la teneur en résine de la dispersion est 0,1 à 60 % en masse.

2. Dispersion contenant une fibre de carbone formée en phase gazeuse selon la revendication 1, où la fibre de carbone est présente de telle sorte que des agrégats de fibre de carbone ayant un diamètre de 40 µm ou moins et des filaments de fibre de carbone individuels séparés sont entremêlés.

3. Dispersion contenant une fibre de carbone formée en phase gazeuse selon la revendication 1 ou 2, où la fibre de carbone formée en phase gazeuse contient 0,001 à 5 % en masse de bore.

4. Dispersion contenant une fibre de carbone formée en phase gazeuse selon la revendication 1 ou 2, où la résine soluble dans un solvant organique est une résine comprenant un polymère ayant une unité répétée structurale qui contient au moins en partie une structure cyclique.

5. Dispersion contenant une fibre de carbone formée en phase gazeuse selon la revendication 1 ou 2, où la résine soluble dans un solvant organique est une résine quelconque parmi polystyrène, polycarbonate, polyarylate, polysulfone, polyéther-imide, polyéthylènetéréphtalate, poly(oxyde de phénylène), poly(sulfure de phénylène), polybutylènetéréphtalate, polyimide, polyamidoimide, polyéther-éther-cétone ou acide polyamique, ou un mélange de ceux-ci.

6. Dispersion contenant une fibre de carbone formée en phase gazeuse selon la revendication 1 ou 2, où le solvant organique a une valeur ET de 45 ou moins et a une structure qui est partiellement cyclique, où la valeur ET est un paramètre de solvant calculé d'après le spectre d'absorption de pyridinium-N-phénolbétaïne.

7. Dispersion contenant une fibre de carbone formée en phase gazeuse selon la revendication 1, où le solvant organique est un solvant quelconque parmi le tétrahydrofurane (THF), la N-méthylpyrrolidone, le benzène, le toluène, le cyclohexane, la γ-butyrolactone, le butylcellosolve ou un mélange de ceux-ci.

8. Procédé pour préparer une dispersion selon la revendication 1 comprenant une étape de dissolution d'une résine dans un solvant organique, d'addition à ceci d'une fibre de carbone formée en phase gazeuse ayant un diamètre de fibre de 0,001 à 5 µm et un rapport d'allongement de 5 à 15 000, et d'exposition du mélange résultant à une agitation et/ou une ultrasonication.

9. Procédé pour préparer une dispersion selon la revendication 1 comprenant une étape de mélange d'une résine soluble dans un solvant organique et d'une fibre de carbone fine formée en phase gazeuse ayant un diamètre de fibre de 0,001 à 5 µm et un rapport d'allongement de 5 à 15 000, et d'addition du mélange résultant à un solvant organique.

10. Procédé pour produire un matériau composite résinique contenant une fibre de carbone formée en phase gazeuse, **caractérisé par** l'application d'une dispersion de fibre de carbone formée en phase gazeuse selon l'une quelconque des revendications 1 à 7 à un matériau de substrat, puis le retrait du solvant.

11. Matériau composite résinique contenant une fibre de carbone formée en phase gazeuse pouvant être obtenu par le procédé selon la revendication 10.

12. Matériau électroconducteur incluant un matériau composite résinique pouvant être obtenu par le procédé selon la revendication 10.

13. Matériau thermiquement conducteur incluant un matériau composite résinique pouvant être obtenu par le procédé selon la revendication 10.
